Europäisches Patentamt

European Patent Office

Office européen des brevets

(11) Publication number: **0 438 984 A1**

# EUROPEAN PATENT APPLICATION

(21) Application number: **90830563.4**

(22) Date of filing: **05.12.90**

(51) Int. Cl.⁵: **A61C 8/00**

(30) Priority: **25.01.90 IT 1915490**

(43) Date of publication of application:
**31.07.91 Bulletin 91/31**

(84) Designated Contracting States:
**BE CH DE ES FR GB LI NL SE**

(71) Applicant: **Vitaloni, Ambrogio**
**Via Emilio Cecchi, 1**
**I-20162 Milano(IT)**

Applicant: **Tornari, Lamberto**
**Via IV Novembre, 16**
**I-22040 Alzate Brianza (Milano)(IT)**

(72) Inventor: **Vitaloni, Ambrogio**
**Via Emilio Cecchi, 1**
**I-20162 Milano(IT)**
Inventor: **Tornari, Lamberto**
**Via IV Novembre, 16**
**I-22040 Alzate Brianza (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Buried-screw adjustable stud for dental implants.**

(57) The present invention relates to a buried-screw adjustable stud (1) for dental implants, having a stud body comprising an attachement END piece (2) to be coupled to the buried-screw, and a stud portion (5) proper for coupling to the dental prosthesis.

The main feature of the invention is that at the free end portion of the stud there is provided an eccentric projection (10) adapted to operate as an abutment element for precisely adjusting the dental prosthesis.

FIG. 1

EP 0 438 984 A1

## BURIED-SCREW ADJUSTABLE STUD FOR DENTAL IMPLANTS

### BACKGROUND OF THE INVENTION

The present invention relates to a buried-screw adjustable stud for dental implants.

As is known, in the dental implant art there are at present used attachement screws which are preliminarily arranged inside the cortical portion of the mouth and provided for restraining a stud adapted to operate as a supporting element for the prosthesis.

In particular, for implanting the prosthesis, after having applied the buried-screw and stud, an impression is performed in order to detect the precise stud position at which the prosthesis must be applied.

Before applying the prosthesis, the stud must be properly adjusted after having made a positive cast thereof.

During this step the prosthesis is suitably patterned by applying the lacking tooth on the prosthesis stud.

As further known, during such an application is very important that the prosthesis be properly oriented or adjusted with respect to the stud so as to prevent the prosthesis from being erroneously offset.

Known methods for applying dental prosthesis are mainly based on the skillness of the operator and do not provide for the use of abutment elements adapted to allow the prospthesis to be precisely arranged.

### SUMMARY OF THE INVENTION

Accordingly, the aim of the present invention is to overcome the above mentioned drawbacks by providing a buried-screw adjustable stud for dental implants which allows a dental prosthesis to be mounted in a very precise way.

Within the scope of the above mentioned aim, a main object of the present invention is to provide such a buried-screw adjustable stud for dental implants which is very reliable in operation and which can be easily made starting from easily available materials and elements and which, moreover, is very competitive from a mere economic standpoint.

According to the present invention, the above mentioned aim and objects, as well as yet other objects, which will become more apparent hereinafter, are achieved by a buried-screw adjustable stud for dental implants comprising a stud body including an attachment end piece adapted to be coupled to said buried-screw and a stud portion adapted to be coupled to the prosthesis, characterized in that said buried-screw adjustable stud further comprises, at a free end portion of said stud an eccentric projection adapted to operate as an abutment element for precisely adjusting said dental prosthesis.

### BRIEF DESCRIPTION OF THE DRAWINGS

Further characteristics and advantages of the invention will become more apparent from the following detailed description of a preferred, though not exclusive, embodiment thereof, which is illustrated, by way of an indicative but not limitative example, in the accompanying drawings, where:

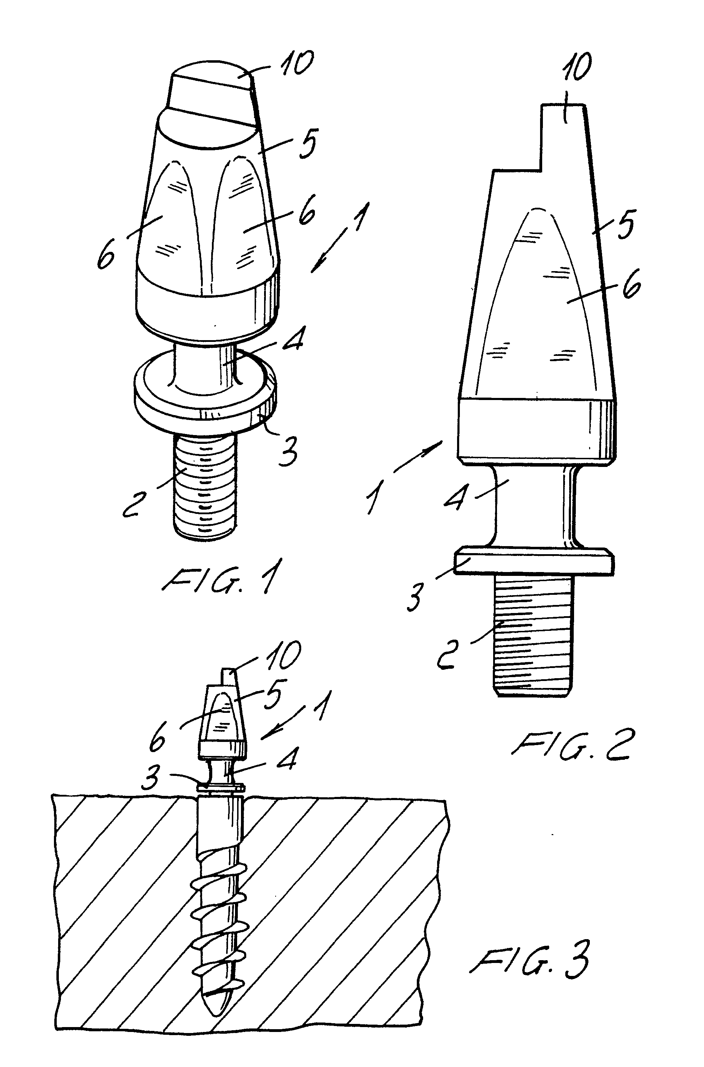

Figure 1 is a schematic perspective view illustraing the adjustable stud according to the invention;

Figure 2 is an elevation view of the adjustable stud according to the invention;

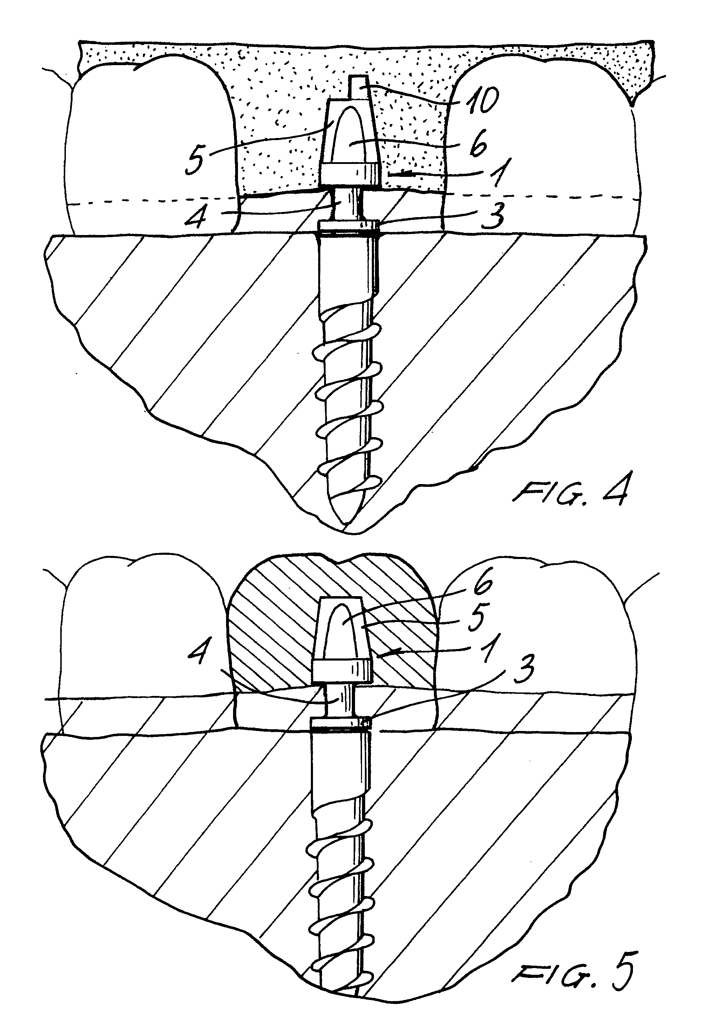

Figure 3 illustrates the stud connected to a buried-screw;

Figure 4 is a schematic view showing an operating step of a prosthesis application method in which a dental impression is taken; and

figure 5 is another schematic view showing a prosthesis applied on the stud according to the invention.

### DESCRIPTION OF THE PREFERRED EMBODIMENT

With reference to the figures of the accompanying drawings, the buried-screw adjustable stud for dental implants according to the invention comprises a stud body, overally indicated at the reference number 1, which is provided with a threaded attachment end piece 2, ending with a flange 3, above which there is provided a narrowed or neck portion 4 thereon there is arranged a stud portion proper 5 of substantially frustum of cone shape.

The stud portion 5 is provided, on its said surface, with a faceted arrangement 6, the facets of which transform a circular shape stud to a substantially quadrangular shape stud.

The main feature of the invention is that, at the free end portion of the stud portion, there is provided an eccentric projection, indicated overally at the reference number 10 which, advantageously though not necessarily, as a semicilindrical shape.

With the disclosed arrangement, as a positive cast is performed in order to make the prosthesis, the stud will provide an automatic adjustement capability since it will form, for the prosthesis being made, a precise abutment allowing the prosthesis to be precisely adjusted.

More specifically, the mentioned eccentrical projection provides a lug which precisely defines the prosthesis orienting or adjusting direction.

Moreover, with the disclosed arrangement, one can obtain the additional advantage that the prosthesis can be precisely adjusted without performing complex adjusting operations, and the prosthesis can be adjusted by an unskilled operator.

In this connection it should be pointed out that the disclosed lug, as the finished prosthesis is applied, is removed so as to perfectly adjust the eight of the prosthesis.

While the invention has been disclosed with reference to a preferred embodiment thereof, it should be apparent that the disclosed embodiment is susceptible to several modifications and variations all of which will come within the spirit and scope of the appended claims.

## Claims

1. A buried-screw adjustable stud for dental implants comprising a stud body including an attachment end piece adapted to be coupled to said buried-screw and a stud portion adapted to be coupled to the prosthesis, characterized in that said buried-screw adjustable stud further comprises, at a free end portion of said stud an eccentric projection adapted to operate as an abutment element for precisely adjusting said dental prosthesis.

2. A buried-screw adjustable stud according to claim 1, characterized in that said adjustable stud further comprises, above said end piece, a flange element thereon there is arranged a tapering portion thereabove said stud portion proper is arranged.

3. A buried-screw adjustable stud according to the preceding claims, characterized in that said stud portion has a substantially frustum of cone shape with opposite facets adapted to provide said stud portion with a substantially quadrangular shape.

4. A buried-screw adjustable stud according to one or more of the preceding claims, characterized in that said eccentric projection has a subtantially semicilindrical shape.

FIG. 1

FIG. 2

FIG. 3

FIG. 4

FIG. 5

European
Patent Office

EUROPEAN SEARCH
REPORT

Application Number

EP 90 83 0563

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 282 789 (GRAFELMANN) <br> * Description; figures * <br> − − − | 1,3 | A 61 <br> C 8/00 |
| A | US-A-4 758 161 (NIZNICK) <br> * Column 1, line 65 - column 2, line 30; figures * <br> − − − − − | 1-3 | |

TECHNICAL FIELDS
SEARCHED (Int. Cl.5)

A 61 C

The present search report has been drawn up for all claims

| Place of search | Date of completion of search | Examiner |
|---|---|---|
| The Hague | 05 April 91 | VANRUNXT J.M.A. |